# EUROPEAN PATENT SPECIFICATION

(11) **EP 3 144 348 B1**
(45) Date of publication and mention of the grant of the patent: **25.07.2018**
(21) Application number: 15185465.0
(22) Date of filing: 16.09.2015
(51) Int. Cl.: C08L 23/14, C08L 23/08, B29C 41/04, C08J 3/12, B29C 41/00

(54) **NON-CRYOGENIC GRINDABLE POLYPROPYLENE BASED COMPOUNDS FOR ROTOMOLDING APPLICATIONS**
NICHTKRYOGEN MAHLFÄHIGE POLYPROPYLENBASIERTE VERBINDUNGEN FÜR ROTATIONSFORMUNGSANWENDUNGEN
COMPOSÉS À BASE DE POLYPROPYLÈNE BROYABLE NON CRYOGÉNIQUE POUR DES APPLICATIONS DE ROTOMOULAGE

(43) Date of publication of application: 22.03.2017
(73) Proprietor: SCG Chemicals Co., Ltd., Bangkok 10800 (TH)
(72) Inventor: Tabtippawon, Dumrongpow, 10800 Bangkok (TH); Phonthammachai, Nopphawan, 10800 Bangkok (TH); Sangribsub, Supaporn, 10800 Bangkok (TH)
(74) Representative: Scholz, Volker

(56) References cited:
- WO-A1-2011/034776
- WO-A1-2015/057423
- US-B2- 7 332 543

## Description

### FIELD OF THE INVENTION

This invention relates to polypropylene compounds for rotomolding products

### BACKGROUND OF THE INVENTION AND PRIOR ART

A conventional material for rotomolding applications is linear low density polyethylene (LLDPE) which provides certain balanced properties of impact resistance and stiffness as well as capability of grinding with conventional disk mill. LLDPE has its limitation in elevated temperature usage such as industrial hot storage water tank or pharmaceutical chemical reser-voir.

In order to be suitable for some rotomolding products which require higher mechanical and thermal properties, polypropylene, polyamide, or others have been considered. These materi-als need cryogenic system (as defined below) in order to grind so that production cost is times higher than conventional disk mill.

To avoid costly cryogenic pulverization, polypropylene (PP) for rotomolding can be produced in form of micro-pellet. High pressure pelletization system is used to produce PP small gran-ules of around 1000 µm in diameter. This form of PP can be easily handled and rotomolded. However, PP micro-pellets still require higher processing temperature but have a narrower processing window than LLDPE and the rotomolded product surface is still a major flaw. Even the production costs are less than cryogenic pulverizing into PP powder but micro-pellet production rate is very low in comparison to the capacity of the extruder. So the total conver-sion costs are still not much reduced.

Polypropylene for rotomolding apparently is lower in impact resistance and features poor pro-cessability as well as surface appearance of the product. It is paid a lot more than conventional PE for the higher service temperature and higher stiffness.

There are some prior arts disclosing compositions for rotomoulding.

WO 2008/009392 A1 discloses a use of a polymer composition for rotomoulding, wherein said composition comprises: (i) at least two propylene polymer components; and (ii) a nucle-ating agent.

US 7332543B2 discloses a polymer composition suitable for rotomoulding comprising an ethylene homopolymer or copolymer; or I) a propylene homopolymer or copolymer.; and II) an ethylene homo or copolymer with at least one other C3-10 alpha-olefin, having a melt flow rate of within 40% of the melt flow rate of component (I), a molecular weight distribution of (Mw/Mn) of less than 4, an Mw of within 30% of the Mw of component (I), a density of 0.880 g/cm3 to 0.940 g/cm3 said density being at least 0.010 g/cm3 less than the density of component (I) and a melting point of at least 5oC less than that of component (I); or (II) a propylene homo or copolymer with at least one other C2-10 alpha-olefin having a melt flow rate of within 40% of the melt flow rate of component (I), a molecular weight distribution of (Mw/Mn) of less than 4, an Mw of within 30% of the Mw of component (I), and a melting point of at least 10 DEG C. less than that of component (I).

WO2013/096696 discloses a rotomolding composition comprising at least 95 percent by weight of a thermoplastic polymer; and from 0.1 to 3 percent by weight of metal oxide lamel-lae; wherein the rotomolding composition is characterized by at least one of the following properties: (a) having a retention at elongation at break of at least 85 percent after 4000 hours of accelerated aging; or (b) having a ductility improvement of at least 50 percent relative to a similar composition free of said metal oxide lamellae.

WO2011/034776 A1 discloses a powdered thermoplastic polyolefin elastomer composition for slush molding processes.

It is therefore the object of the present invention to provide a method for preparing a pulverized polymer composition overcoming drawbacks of the prior art, in particular overcoming high production cost of cryogenic pulverization to obtain PP for rotomolding which has high service temperature, balanced mechanical properties and good finished product appearance.

### DETAILED DESCRIPTION OF THE INVENTION

The above objects are achieved in accordance with the subject-matter of the independent claims. Preferred embodiments result from the sub-claims.

This object is particularly achieved by Method for preparing a pulverized polymer composition comprising: a) providing a composition comprising i. 65 to 95 parts by weight of at least one polypropylene selected from the group consisting of homopolymer, impact polymer, wherein the impact polymer is a polypropylene which contains ethylene-propylene rubber as an impact modifier, random copolymer or a mixture thereof, ii. 5 to 30 parts by weight of at least one polyethylene selected from the group consisting of high density polyethylene, low density poly- ethylene, linear low density polyethylene, copolymer of etyhylene- propylene or a mixture thereof, and iii. 0,0005 to 7 parts by weight of at least one additive; and b) pulverizing the composition of step a) at a temperature of at least 0°C, preferably 10-30 °C.

Polypropylene (PP) is commonly categorized into three types, namely homopolymer, random copolymer and blockcopolymer. The random copolymer PP which is randomly copolymer-ized with ethylene comonomer.

Impact copolymer in terms of the invention is PP which contains ethylene-propylene rubber (ERP) as an impact modifier.

In the invention composition, the amount of the ingredients may preferably be in percent by weight, provided that the respective constituents add up to 100 percent by weight. That is, in this preferred case, the amount of ingredient aa), i.e. polypropylene, may be not more than 94.9995 percent by weight.

It is preferred that the composition further comprises 0.005 to 0.5, preferably 0.1 to 0.3, parts by weight of a thermoplastic polyester elastomer.

In a preferred embodiment the at least one additive comprises
a) 0.0005-10 parts by weight of at least one sterically hindered phenolic antioxidant or a non-phenolic antioxidant, a hydroxylamine or mixture thereof,
b) 0.0005 to 1 parts by weight of a processing additive having a molecular weight below 10.000 g/mole selected from the group consisting of phosphorous-based antioxidant, preferably phosphite esters, alkyl phosphites, aryl phosphites, hindered aryl phosphites;
c) 0.002 to 2 parts by weight of an UV-stabilizer, selected from the group consisting of hindered amine light stabilizers (HALS) having a molecular weight of 800 to 1.500 g/mole.
d) 0.002 to 2 parts by weight of a thermoplastic polyester elastomer; and
e) 0 to 0.5 parts by weight of a nucleating agent.

Phosphorous-based antioxidants according to the invention act as hydroperoxide decomposer under the processing conditions of polyolefins. A respective antioxidant prevents autooxidation by reducing hydroperoxides (oxidation intermediates) to alcohols.

A nucleating agent in terms of the present invention is a clarifying agent which is an additive for polypropylene in order to enhance its clarity. Most clarifying agents in the market are dibenzylendene sorbitol (DBS) or chemical derivatives thereof.

More preferred the amount of the polypropylene is in the range of 70 to 90 parts by weight, preferably 75 to 90 parts by weight.

Most preferred the amount of the polyethylene is in the range of 10 to 30 parts by weight, preferably to 20 to 30 parts by weight.

Preferably, pulverizing is pulverizing by means of a non-cryogenic system.

A cryogenic system in terms of the present invention is a system in which the polypropylene is frozen to below -40°C. To ensure non-cryogenic pulverization, the temperature is at least 0°C and preferably between 10 and 30°C.

Cryogenic pulverization refers to a pulverization process which incorporates a cooling medium, such as liquid nitrogen, to cool the grinding material down to below its Tg. Hence, the material is brittle and easy to grind into powder form.

Finally, the method comprises a further step of rotomolding after step b.

It was surprisingly found by the inventors that the inventive method solves the problem underlying the present invention by overcoming drawbacks of the prior art.

In general, the object of the present invention is achieved by the method which overcomes high production costs of cryogenic pulverization to obtain PP for rotomolding which has high service temperature, balance mechanical properties and could finish product appearance.

In particular, it was found by the inventors, that the composition used in the inventive method using the preferred combination of additives can reduce pinhole and bubbles in polymer blend system for rotomolding application and shorten cycle time of rotomolded parts. It prefers non- phenolic antioxidant.

It was further surprisingly found that an additive comprising a nucleating agent can reduce pinhole and bubbles in a polymer blend.

Finally, it was surprisingly found that a processing stabilizer selected from phosphonites can increase heat distortion temperature (HDT) of polymer blend more than 10 °C.

The compounds may comprise of polyolefin elastomer or polyolefin plastomer for impact properties improvement composition between 0.05 - 25 percent by weight.

The materials are compounded at 190°C by a twin screw extruder with high degree of mixing configuration and are pelletized. Pulverization process of the compound is taken place in a tooth-disc type mill without using cryogenic system.

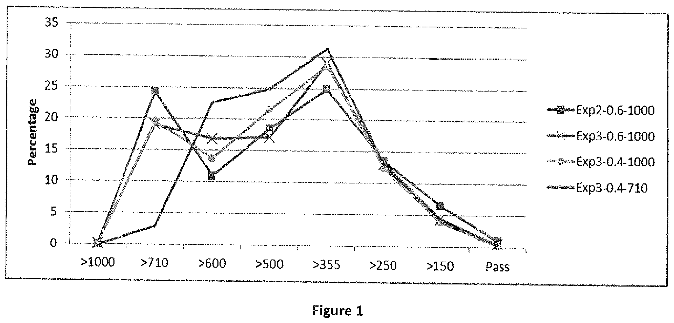

The present invention will now be described in greater detail with reference to specific exam-ples and the accompanied Figures, wherein
FIG.1 Particle size distribution of non-cryogenic grindable PP compounds.

### EXAMPLES

### Comparative Example 1 - Prior art: micro-pelletized polypropylene for rotomolding

Commercial available PP with additional anti-oxidants and UV stabilizer for rotomolding is processed by single or twin screw extruder in which micro-pelletization system is installed at the end of screw. The molten polymer is forced through pelletization die and cut under water. This micro-pellet product is normally around 800-1200 µm in diameter. Even the pellets are quite uniform in size and shape, the production rate is very low and that results in high machine and conver-sion cost.

### Example 2 - non-cryogenic PP compound for rotomolding

Polypropylene compound comprises 25 parts by weight of linear-low density polyethylene (MI 7 g/10min), 75 parts by weight of random copolymer polypropylene (ethylene comonomer) (MI 12 g/10min) is well compounded together in twin screw extruder including 0.05 parts by weight of an additive comprising non-phenolic antioxidant (Irganox® 3114), 0.1 parts by weight of phosphorus based stabilizer (Irgafos® 168), 0.4 parts by weight of Hindered Amine Light Stabilizer (Tinuvin® 783), and 0.2 parts by weight of polyester elastomer (Hytrel® 5556).

The PP compound is ground in tooth disc pulverizer into powder. The disc gap is set to 0.6 mm and sieving using 710 mm or 1000 mm mesh. The grinding is at full machine capacity.

### Example 3 - non-cryogenic PP compound for rotomolding

Polypropylene compound consists of 35 parts by weight of linear-low density polyethylene (MI 7 g/10min), 10 parts by weight of random copolymer polypropylene (ethylene comonomer) (MI 12 g/10min), and 55 parts by weight of impact copolymer polypropylene (ethylene comonomer) (MI 10 g/10min). The additive compound process, and pulverizing process are the same as in Example 2.

### Example 4 - non-cryogenic PP compound for rotomolding

Polypropylene compound consists of 30 parts by weight of linear-low density polyethylene (MI 7 g/10min) and 70 parts by weight of random copolymer polypropylene (ethylene comonomer) (MI 12 g/10min). The additive package, compound process, and pulverizing process are the same as in Example 2.

### Example 5 - non-cryogenic PP compound for rotomolding (additive variation)

Some formulations (in accordance with the invention) of different PP compounds and additives which provide non-cryogenic grinding property are described. PP can be one of homo polymer, impact copolymer or random copolymer. PE can be either high density polyethylene or linear low density polyethylene. Percentage of PE can be 5-30 by weight, preferably 20-30 by weight. Primary antioxidant can be either hindered phenol type or non-phenol type at 500 ppm. Secondary antioxidant can be either phosphorus-based type or phosphonite-based type at 1000 ppm. Stabilizer is a selection of HALS by BASF Chimassorb/Tinuvin) or Cytec (Cyasorb) with content of 2000 - 4000 ppm.

The compounding process is the same as in Example 2. After grinding, these formulations were evaluated in rotomolding application test (TABLE 3).

**TABLE 1**

| Properties | Unit | Method | Example 1 | Example 2 | Example 3 | Example 4 |
|---|---|---|---|---|---|---|
| HDT | °C | ASTM D1525 | 93.6 | 96.8 | 93.7 | 89.3 |
| Flexural Modulus | MPa | ASTM D790 | 1180 | 1000 | 1020 | 1030 |
| Impact Strength | kg.cm/cm | ASTM D256 | 7.8 | 5.6 | 8.2 | 5.1 |
| Tensile Strength | MPa | ASTM D638 | 27 | 26 | 24 | 27 |
| Hardness | D-Scale | ASTM D2240 | 67.7 | 63.7 | 64.7 | 42 |

### Results and Discussion

The mechanical and thermal properties of Example 1- 4 are shown in Table 1. The main requirements for PP grade rotomoding are elevated temperature usage. So HDT and flexural modulus are the in the focus (with fair impact resistance). PP compound in Example 2 and 3 (according to the invention) have high dimensional stability at high temperature as shown in HDT. Comparing Example 2 and 4, the higher LLDPE composition in Example 4 tends to improve in grinding processability, however; it causes lower overall mechanical properties below the requirements of PP for rotomolding especially in service temperature. The benefit of inventive Examples 2 - 4 is capable of grinding without cryogenic system. Evaluation of grinding performance of Example 2 and 3 is shown in Table 2 and FIG.1.

As neat PP cannot be pulverized to form powder under non-cryogenic system, there is one approach to use neat PP by making it in the form of micro-pellets, which doesn't need to go through pulverization before molding. Therefore, the grinding performance of Comparative Example 1 cannot be evaluate as it doesn't go through pulverization process.

Disc gap and sieve mesh are varied to optimize particle size distribution. The highly uniform particle size is achieved when using 710-mesh screen and 0.4µm gap.

Example 4 describes some of formulations which have good rotomolding proessbility. Non-phenolic primary AO provides glossy and better surface smoothness than phenolic one. Phos-phonite secondary AO has outstanding effect in increasing HDT and significantly lower PIAT (Peak Internal Air Temperature) in rotomolding process. Content of HALS and nucleating agent has slightly inverse effect on cycle time but too high content of HALS is not recom-mended for food grade product.

## Claims

1. Method for preparing a pulverized polymer composition comprising:
a. providing a composition comprising
i. 65 to 95 parts by weight of at least one polypropylene selected from the group consisting of homopolymer, impact polymer, wherein the impact polymer is a polypropylene which contains ethylene-propylene rubber as an impact modifier, random copolymer or a mixture thereof,
ii. 5 to 30 parts by weight of at least one polyethylene selected from the group consisting of high density polyethylene, low density polyethylene, linear low density polyethylene, copolymer of etyhylene-propylene or a mixture thereof, and
iii. 0,0005 to 7 parts by weight of at least one additive; and
b. pulverizing the composition of step a) at a temperature of at least 0°C, preferably 10-30 °C.

2. Method according to claim 1, wherein the composition further comprises 0.005 to 0.5, preferably 0.1 to 0.3, parts by weight of a thermoplastic polyester elastomer.

3. Method according to claim 1 or 2, wherein the at least one additive comprises
a) 0.0005-10 parts by weight of at least one sterically hindered phenolic antioxidant or a non-phenolic antioxidant, a hydroxylamine or mixture thereof,
b) 0.0005 to 1 parts by weight of a processing additive having a molecular weight below 10.000 g/mole of phosphorus-based antioxidant preferably phosphite esters, alkyl phosphites, aryl phosphites, hindered aryl phosphites, etc.;
c) 0.002 to 2 parts by weight of an UV-stabilizer, selected from the group consisting of hindered amine light stabilizers (HALS) having a molecular weight of 800 to 1.500 g/mole.
d) 0.002 to 2 parts by weight of a thermoplastic polyester elastomer; and
e) 0 to 0.5 parts by weight of a nucleating agent.

4. Method according to any of the preceding claims, wherein the amount of the polypropylene is in the range of 70 to 90 parts by weight, preferably 75 to 90 parts by weight.

5. Method according to any of the preceding claims, wherein the amount of the polyethylene is in the range of 10 to 30 parts by weight, preferably to 20 to 30 parts by weight.

6. Method according to any of the preceding claims, wherein pulverizing is pulverizing by means of a non-cryogenic system.

7. Method according to any of the preceding claims, further comprising a step of rotomolding after step b.

## Patentansprüche

1. Verfahren zum Herstellen einer pulverisierten Polymerzusammensetzung, umfassend:
a. Bereitstellen einer Zusammensetzung, umfassend
i. 65 bis 95 Gewichtsteile zumindest eines Polypropylens, ausgewählt aus der Gruppe, bestehend aus Homopolymer, schlagfestem Polymer, wobei das schlagfeste Polymer ein Polypropylen ist, das Ethylen-Propylenkautschuk als einen Schlagmodifikator enthält, zufälligem Copolymer und einem Gemisch davon,
ii. 5 bis 30 Gewichtsteile zumindest eines Polyethylens, ausgewählt aus der Gruppe, bestehend aus Polyethylen hoher Dichte, Polyethylen niedriger Dichte, linearem Polyethylen niedriger Dichte, Copolymer des Ethylenpropylens oder einem Gemisch davon, und
iii. 0,0005 bis 7 Gewichtsteile zumindest eines Additivs; und
b. Pulverisieren der Zusammensetzung nach Schritt a) bei einer Temperatur von zumindest 0°C, vorzugsweise 10 - 30°C.

2. Verfahren nach Anspruch 1, wobei die Zusammensetzung ferner 0,005 bis 0,5, vorzugsweise 0,1 bis 0,3 Gewichtsteile eines thermoplastischen Polyesterelastomers enthält.

3. Verfahren nach Anspruch 1 oder 2, wobei das zumindest eine Additiv umfasst
a) 0,0005 - 10 Gewichtsteile zumindest eines sterisch gehinderten phenolischen Antioxidans, oder eines nicht phenolischen Antioxidans, eines Hydroxylaminos oder eines Gemischs davon,
b) 0,0005 bis 1 Gewichtsteil eines Verarbeitungsadditivs mit einem Molekulargewicht von weniger als 10.000 g/mol eines phosphorbasierten Antioxidans, vorzugsweise Phosphitester, Alkylphosphite, Arylphosphite, gehinderte Arylphosphite, etc.;
c) 0,002 bis 2 Gewichtsteile eines UV-Stabilisators, ausgewählt aus der Gruppe, bestehend aus gehinderten Aminlichtstabilisatoren (HALS) mit einem Molekulargewicht von 800 bis 1.5000 g/mol;
d) 0,002 bis 2 Gewichtsteile eines thermoplastischen Polyesterelastomers; und
e) o bis 0,5 Gewichtsteile eines Keimbildners.

4. Verfahren nach einem der vorangehenden Ansprüche, wobei die Menge des Polypropylens in einem Bereich von 70 bis 90 Gewichtsteilen, vorzugsweise 75 bis 90 Gewichtsteilen, ist.

5. Verfahren nach einem der vorangehenden Ansprüche, wobei die Menge des Polyethylens in einem Bereich von 10 bis 30 Gewichtsteilen, vorzugsweise 20 bis 30 Gewichtsteilen, ist.

6. Verfahren nach einem der vorangehenden Ansprüche, wobei das Pulverisieren das Pulverisieren mittels eines nicht kryogenen Systems ist.

7. Verfahren nach einem der vorangehenden Ansprüche, ferner umfassend einen Schritt des Rotationsformens nach dem Schritt b.

## Revendications

1. Procédé de préparation d'une composition polymère pulvérisée consistant à :
a. réaliser une composition comprenant
i. 65 à 95 parties en poids d'au moins un polypropylène choisi dans le groupe comprenant l'homopolymère, le polymère choc, le polymère choc étant un polypropylène qui contient du caoutchouc éthylène propylène en tant que modificateur de résistance au choc, le copolymère aléatoire ou un mélange de ces éléments,
ii. 5 à 30 parties en poids d'au moins un polyéthylène choisi dans le groupe comprenant le polyéthylène haute densité, le polyéthylène basse densité, le polyéthylène à basse densité linéaire, le copolymère éthylène-propylène ou un mélange de ces éléments, et
iii. 0,0005 à 7 parties en poids d'au moins un additif ; et à
b. pulvériser la composition de l'étape a) à une température d'au moins 0 °C, de préférence de 10-30 °C.

2. Procédé selon la revendication 1, dans lequel la composition comprend en outre 0,005 à 0,5, de préférence 0,1 à 0,3 partie en poids d'un élastomère à base de polyester thermoplastique.

3. Procédé selon la revendication 1 ou 2, dans lequel ledit au moins un additif comprend
a. 0,0005 à 10 parties en poids d'au moins un antioxydant phénolique à encombrement stérique ou un antioxydant non phénolique, de l'hydroxylamine ou un mélange de ces éléments,
b. 0,0005 à 1 partie en poids d'un additif de traitement dont le poids moléculaire est inférieur à 10 000 g/mol d'antioxydant à base de phosphore, de préférence d'esters de phosphite, de phosphites d'alkyle, de phosphites d'aryle, de phosphites d'aryle encombrés, etc. ;
c. 0,002 à 2 parties en poids d'un stabilisant UV, choisi dans le groupe comprenant des photo-stabilisants d'amine à encombrement (HALS) dont le poids moléculaire est compris entre environ 800 et 1 500 g/mol.
d. 0,002 à 2 parties en poids d'un élastomère à base de polyester thermoplastique ; et
e. 0 à 0,5 partie en poids d'un agent de nucléation.

4. Procédé selon l'une quelconque des revendications précédentes, dans lequel la quantité de polypropylène est comprise entre 70 et 90 parties en poids, de préférence 75 à 90 parties en poids.

5. Procédé selon l'une quelconque des revendications précédentes, dans lequel la quantité de polyéthylène est comprise entre 10 et 30 parties en poids, de préférence 20 à 30 parties en poids.

6. Procédé selon l'une quelconque des revendications précédentes, dans lequel la pulvérisation est une pulvérisation au moyen d'un système non cryogénique.

7. Procédé selon l'une quelconque des revendications précédentes, comprenant en outre une étape de rotomoulage après l'étape b.
